Europäisches Patentamt

European Patent Office

Office européen des brevets

(11) Numéro de publication: **0 273 784 B1**

## (12) FASCICULE DE BREVET EUROPEEN

(45) Date de publication de fascicule du brevet:
**06.03.91**

(51) Int. Cl.⁵: **A01K 7/06**

(21) Numéro de dépôt: **87402541.4**

(22) Date de dépôt: **10.11.87**

(54) Perfectionnements aux robinetteries d'abreuvoirs pour animaux.

(30) Priorité: **19.11.86 FR 8616083**

(43) Date de publication de la demande:
**06.07.88 Bulletin 88/27**

(45) Mention de la délivrance du brevet:
**06.03.91 Bulletin 91/10**

(84) Etats contractants désignés:
**BE DE FR GB IT LU NL**

(56) Documents cités:
**DE-A- 2 306 380**
**US-A- 3 566 844**

(73) Titulaire: **LA BUVETTE**
**15, rue de l'Arquebuse**
**F-08000 Charleville-Mezières(FR)**

(72) Inventeur: **Gustin, Jean-Pierre**
**15, rue de l'Arquebuse**
**F-08000 Charleville-Mézières(FR)**

(74) Mandataire: **Loyer, Bertrand et al**
**Cabinet Pierre Loyer 77, rue Boissière**
**F-75116 Paris(FR)**

## Description

La présente invention est relative à des perfectionnements aux robinetteries d'abreuvoirs automatiques pour animaux.

Il est connu de réaliser des abreuvoirs automatiques pour animaux comportant un bol surmonté d'une arrivée d'eau qui est obturée par un clapet solidaire d'une tige qui fait saillie au-dessus du bol. Lorsque l'animal déplace cette tige avec son museau, il déplace le clapet, qui s'ouvre partiellement en laissant couler de l'eau dans le bol. Sur un tel abreuvoir, il est toujours nécessaire d'intervenir, après sa mise en place, soit pour en ajuster ou modifier le débit, soit pour changer une pièce d'usure, soit pour le condamner provisoirement, par exemple si on veut obliger les animaux à s'abreuver ailleurs pendant une période donnée (réservoir avec vitamines ou autres).

Pour intervenir sur les dispositifs actuellement connus, il faut procéder au démontage de la partie inférieure de la robinetterie et donc arrêter l'alimentation en eau soit en interrompant l'alimentation générale de toute l'installation quand elle comporte une pluralité d'abreuvoirs, soit en disposant un robinet particulier en amont de chaque abreuvoir, ce qui est onéreux.

Pour éviter cela, on a proposé dans le brevet US-A-3.566.844 de disposer en série deux clapets, le corps du clapet aval maintenant ouvert le clapet amont lorsqu'il est en position et le laissant prendre la position fermée lorsqu'il est démonté.

D'autre part, dans le brevet européen 0 139 328, on a décrit un abreuvoir pour animaux dans lequel le clapet actionné par l'animal est muni d'un conduit conique de sorte qu'en sectionnant ce conduit à une hauteur déterminée, on pratique dans ce conduit une ouverture d'un diamètre déterminé, ce qui détermine un débit. L'inconvénient de cette disposition est qu'une fois que l'on a coupé ce conduit conique, on ne peut obtenir qu'un débit que l'on ne peut plus diminuer : en effet, on ne peut qu'obtenir des débits croissants en sectionnant de plus en plus bas.

Il est également connu par le brevet DE-A-23 06 380 de modifier le débit délivré par un abreuvoir en prévoyant un disque traversé de trois orifices déplaçable en rotation sur lui-même dans la membrane du clapet, ladite membrane étant à cet effet traversée par deux passages. Il est alors possible d'obtenir deux débits en positionnant soit deux des orifices du disque en correspondance avec les deux passages de la membrane soit le troisième orifice en correspondance avec un seul des passages de la membrane. Une telle disposition présente comme inconvénient majeur le fait que le régulateur de débit est alors directement sur le clapet d'ouverture ou de fermeture de la canalisation et qu'alors son réglage nécessite que l'on démonte le clapet et donc que l'on puisse couper l'alimentation en eau. De plus l'insertion d'un disque métallique dans une membrane en caoutchouc destinée à être déformée chaque fois que l'on veut ouvrir le clapet fragilise celle-ci ce qui augmente largement la maintenance d'un tel dispositif.

La présente invention a pour objet un abreuvoir qui présente les avantages du brevet US 3.566.844 ainsi que des moyens simples à mettre en oeuvre qui permettent par l'intermédiaire de moyens qui permettent de modifier à volonté le débit aussi bien dans le sens de l'augmentation que dans celui de la diminution.

La présente invention concerne un abreuvoir automatique pour animaux du type comportant un bol surmonté d'une robinetterie reliée à une source d'eau sous pression, ladite robinetterie étant fermée par un clapet commandé par une tige faisant saillie dans le bol pour être actionnée par l'animal, et comportant en amont du clapet un autre clapet constitué d'un obturateur soulevé de son siège par une tige-poussoir bloquée en position par la partie inférieure de la robinetterie, ledit clapet se fermant automatiquement lorsque ladite partie inférieure de la robinetterie est démontée, caractérisé en ce que ladite robinetterie comporte un régulateur de débit constitué par un culot muni d'un fond percé d'un orifice, ledit fond supportant une pastille munie d'une pluralité d'orifices pouvant être mis en correspondance avec l'orifice, le culot dudit régulateur étant maintenu en position dans un alésage en aval du clapet par la partie inférieure de la robinetterie, tandis que la pastille est solidaire de la tige-poussoir de sorte que l'ajustement du débit soit fait en faisant pivoter la tige sur elle-même.

L'invention est encore remarquable en ce que les orifices de la pastille sont de diamètres croissants.

A titre d'exemple non limitatif et pour faciliter la compréhension de l'invention, on a représenté aux dessins annexés :

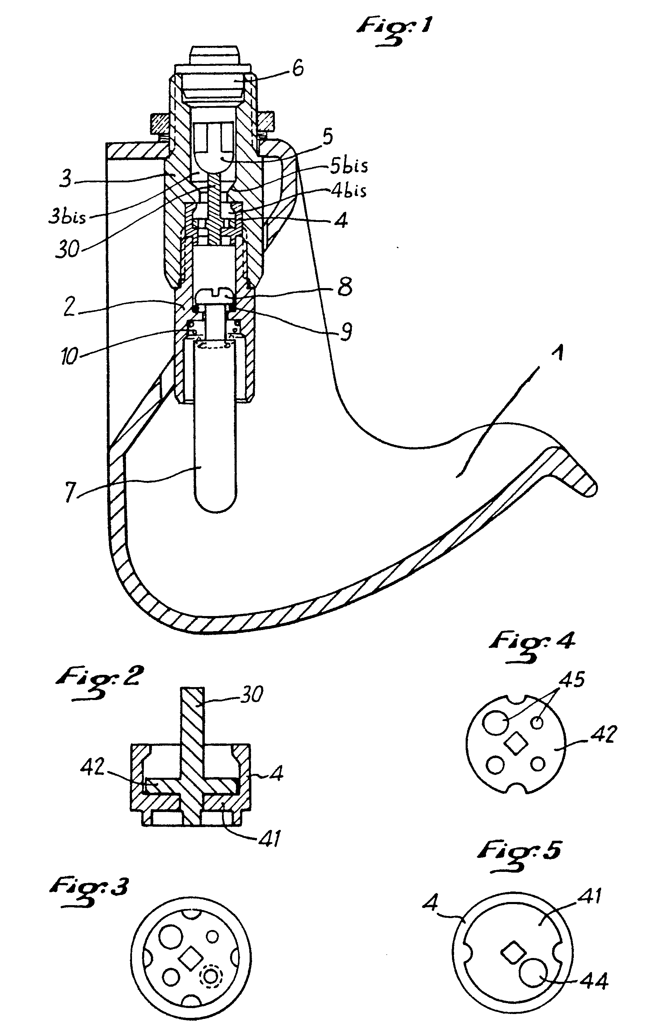

Figure 1 une vue en coupe longitudinale d'un abreuvoir automatique pour animaux comportant une robinetterie conforme à l'invention ;

Figure 2 une vue d'un détail de la figure 1 illustrant le régulateur de débit et la tige de commande du clapet d'obturation ;

Figure 3 une vue en plan de la figure 2 ;

Figures 4 et 5 deux vues séparées des deux éléments de la figure 3.

En se reportant à ces figures on voit que l'abreuvoir comporte un bol 1 surmonté par une robinetterie qui comporte un corps 3, relié à une source d'eau sous pression par un raccord 6, à la partie inférieure duquel est vissé un tube 2 obturé par un clapet 8, maintenu en position fermée sur son siège 9, constitué par un joint torique, au moyen d'un ressort 10. Le clapet 8 est solidaire d'une tige 7 qui fait saillie au-dessus du bol 1. Quand un animal déplace la tige 7 avec son museau, le clapet 8 s'ouvre et de l'eau coule dans le bol 1.

Ce type d'abreuvoir automatique est connu.

Selon la présente invention, le corps 3 de la robinetterie comporte un autre clapet qui est placé en amont du clapet 8. Ce clapet comporte un siège 5bis et un oburateur 5 qui se présente comme un bouchon libre qui se trouve dans l'alésage 3bis du corps 3 et est appliqué sur son siège 5bis par la pression de l'eau. Ce bouchon 5 est soulevé de son siège par une tige 30 qui fait saillie dans l'alésage 3bis et est maintenu en place par le tube 2 lorsque ce dernier est en place. On voit donc que lorsqu'on dévisse le tube 2, la tige 30 s'abaisse et l'obturateur 5 vient s'asseoir sur son siège 5bis ; de sorte que lorsque le tube 2 et le clapet 8 qu'il porte sont démontés, la robinetterie est obturée par le clapet 5-5bis.

Cela permet donc toutes les interventions voulues sans nécessiter la pose de robinets particuliers.

Selon l'invention, la tige 30 fait partie d'un régulateur de débit. A cette fin, la tige 30 est solidaire d'une pastille 42 qui repose sur le fond 41 d'un culot 4. Le fond 41 du culot 4 comporte un orifice 44 tandis que la pastille 42 comporte une pluralité d'orifices 45 de préférence de diamètres croissants, le plus gros orifice ayant un diamètre égal à celui de l'orifice 44. Le culot 4 est maintenu en position dans un alésage 4bis, situé en aval du clapet 5-5bis par vissage du tube 2. Ainsi, le tube 2 maintient le culot 4 qui lui-même soutient la tige 30. En faisant tourner la tige 30 par rapport au culot 4, on peut faire coincider à volonté l'un ou l'autre des orifices 45 de la pastille 42 avec l'orifice unique 44 du fond 41 du culot 4, de sorte que l'on peut ajuster le débit de la robinetterie.

## Revendications

1. Abreuvoir automatique pour animaux du type comportant un bol (1) surmonté d'une robinetterie (3) reliée à une source d'eau sous pression, ladite robinetterie (3) étant fermée par un clapet (8) commandé par une tige (7) faisant saillie dans le bol (1) pour être actionnée par l'animal, et comportant en amont du clapet (8) un autre clapet (5) constitué d'un obturateur (5) soulevé de son siège (5bis) par une tige-poussoir (30) bloquée en position par la partie inférieure (2) de la robinetterie, ledit clapet (5) se fermant automatiquement lorsque ladite partie inférieure (2) de la robinetterie (3) est démontée, caractérisé en ce que ladite robinetterie (3) comporte un régulateur de débit constitué par un culot (4) muni d'un fond (41) percé d'un orifice (44), ledit fond (41) supportant une pastille (42) munie d'une pluralité d'orifices (45) pouvant être mis en correspondance avec l'orifice (44), le culot (4) dudit régulateur étant maintenu en position dans un alésage (4bis) en aval du clapet (5) par la partie inférieure (2) de la robinetterie, tandis que la pastille (42) est solidaire de la tige-poussoir (30) de sorte que l'ajustement du débit soit fait en faisant pivoter la tige (30) sur elle-même.

2. Abreuvoir selon la revendication 1, caractérisé en ce que les orifices (45) de la pastille (42) sont de diamètres croissants.

## Claims

1. An automatic drinking trough for animals, of the type comprising a bowl (1) above which is provided a valve system (3) connected to a source of pressurized water, said valve system (3) being closable by a valve plug (8) driven by a stem (7) which protrudes within the bowl (1) for being actuated by an animal, and comprising, upstream of the valve plug (8), a further valve plug (5) formed of a plug member (5) which may be raised from its seat (5bis) by a pusher rod (30) locked in place by the lower portion (2) of the valve system (3), said further valve plug (5) being automatically closed when said lower portion (2) of the valve system is taken down, **characterized** in that the said valve system (3) comprises a flow regulator constituted by a cap (4) provided with a bottom (41) having therein an orifice (44), said bottom (41) supporting a disc (42) provided with a plurality of orifices (45) which may be brought in registry with the orifice (44), the cap (4) of said flow regulator being held in place inside a bore (4bis) downstream of the valve plug (5) by the lower portion (2) of the valve system, while the disc (42) is bound up with the pusher rod (30) so that adjustment of the flow rate may be done by causing the pusher rod (30) to rotate about its axis.

2. A drinking trough according to Claim 1, characterized in that the orifices (45) of the disc (42) have increasing diameters.

## Ansprüche

1. Automatische Tränke für Tiere, mit einer Schale (1), die von einer an eine Druckwasserquelle angeschlossenen und von einem Sperrventil (8) verschließbaren Armatur (3) überragt wird, wobei das Ventil mittels eines Schaftes (7) gesteuert wird, der zur Betätigung durch das Tier in die Schale (1) vorragt, und mit einem stromaufwärts vom Sperrventil (8) angeordneten anderen Ventil (5), das von einem Verschluß (5) gebildet wird, der von seinem Sitz (5bis) mittels eines durch den unteren Abschnitt (2) der Armatur lageblockierbaren Stößels (30) angehoben ist, wobei das Ventil (5) sich automatisch schließt, wenn dieser untere Abschnitt (2) der Armatur (3) abmontiert wird, dadurch gekennzeichnet, daß die Armatur (3) einen Durchflußmengenregler aufweist, der von einem Sockel (4) gebildet wird, welcher einen von einer Öffnung (44) durchsetzten Boden (41) umfaßt, der eine Scheibe (42) mit einer Vielzahl von zur Öffnung (44) ausrichtbaren Öffnungen (45) abstützt, wobei der Sockel (4) des Reglers in einer dem Ventil (5) nachgeschalteten Bohrung (4bis) mittels des unteren Abschnitts (2) der Armatur in Lage gehalten wird und die Scheibe (42) am Stößel (30) derart befestigt ist, daß die Einstellung der Durchflußmenge durch Verdrehen des Stößels (30) um sich selbst erfolgt.

2. Tränke nach Anspruch 1, dadurch gekennzeichnet, daß die Öffnungen (45) der Scheibe (42) mit zunehmend größeren Durchmessern versehen sind.

*Fig. 1*

*Fig. 2*

*Fig. 3*

*Fig. 4*

*Fig. 5*